# EUROPEAN PATENT SPECIFICATION

(11) **EP 1 964 795 B1**
(45) Date of publication and mention of the grant of the patent: **07.04.2010**
(21) Application number: 08151831.8
(22) Date of filing: 22.02.2008
(51) Int. Cl.: B65G 45/26, B65G 45/14, B65G 45/24

(54) **Device for cleaning from a conveyor belt fluid substances sprayed thereon**
Vorrichtung zum Reinigen von Flüssigkeitssubstanzen, die auf ein Förderband gesprüht wurden
Dispositif de nettoyage d'une bande porteuse souillée de substances fluides pulverisées

(30) Priority: 27.02.2007 IT BO20070124
(43) Date of publication of application: 03.09.2008
(73) Proprietor: CEFLA SOCIETA' COOPERATIVA, 40026 Imola (BO) (IT)
(72) Inventor: Chiarini, Stefano, 48017 Conselice, Province of Ravenna (IT); Dovadola, Massimo, 48012 Bagnacavallo, Province of Ravenna (IT)
(74) Representative: Porsia, Dino

(56) References cited:
- EP-A- 0 425 969
- EP-A- 1 033 177
- EP-A- 1 136 399

## Description

The invention concerns a device for cleaning a fluid substance from a conveyor belt which is endlessly wound and driven around at least two end rollers, at least one of which is motor-driven. In particular the invention relates to the conveyor belts of machines and plants for painting, dyeing or impregnating processes, referred to below in short and for the sake of simplicity as "painting machines", which convey the articles to be treated through a chamber for spraying the fluid treatment substance, such as paint for example. The conveyor belt is formed by two sections: an upper outward section, on which the articles to be treated are usually rested, said articles, when they pass through the spraying chamber, being coated with the paint spray, and a lower return section, which is situated outside the said spraying chamber and which is soiled with paint and must be cleaned before returning to the upper level, in order to recover the residual paint and ensure that the clean conveyor is able to receive new articles.

The devices currently used to recover the residual paint and clean the belt comprise means for removing said residual paint collected by the belt during coating of the parts, by means of a shaving or scraping operation, and comprise cleaning systems which in synchronism wet the belt with solvent and then dry it, for example using fixed doctor blades or rotating cylinders or a combination of these means.

In European patent EP 425969 in the name of the Applicant, the cleaning device comprises a steel cylinder or roller with a smooth surface, which acts on the return section of the conveyor with a parallel arrangement for example facing the end drive roller of the said conveyor and this steel roller is made to rotate in the opposite direction to the direction of feeding of the belt, so as to perform effective shaving-off of the residual paint which is then detached from this roller by scraping means and collected in a recovery hopper. The said counter-rotating cleaning roller, also called a reverse roller, is partially immersed with a bottom portion thereof inside a solvent-containing tank so as to be cleaned and convey a film of the said solvent into the zone of contact with the lower section of the belt to be cleaned, in order to wet the belt zone from which the paint is removed and ensure that the said conveyor section leaves the reverse roller with a small amount of solvent which has the function of softening further any residual paint which can thus be more easily removed by following cleaning means comprising a further reverse roller and/or fixed doctor blades and/or rotating brushes and any other suitable means.

This reverse-roller cleaning system has, over time, proved to be very valid and advantageous, but poses problems associated with the accumulation of paint on the doctor blade for initial scraping of the said reverse roller, especially when the paint is very dense, so much so that in these cases the said doctor blade is immersed during operation inside the solvent tank which thus becomes contaminated with paint, so that the solvent must be continually removed and renewed.

Another device for cleaning the conveyor belt of a painting machine is described in the patent EP 1033177 (Venjakob) which discloses the preamble of claim 1 and comprises a closed scraping band consisting of a small conveyor belt situated with the outer surface of its upper section transversely and in contact with the bottom part of the conveyor to be cleaned which is curved around the end drive roller or over a following auxiliary convex runner, it being envisaged that this secondary belt forms transversely an acute angle with the main conveyor portion with which it makes contact, so as to form a channel for containing the removed paint and it being envisaged that the longitudinal axis of the said secondary belt is not parallel to that of the end drive roller of the conveyor to be cleaned, so that the removed paint can be rapidly conveyed away, without accumulating on said secondary belt as instead occurs in the case of cleaning with a fixed doctor blade. The secondary cleaning belt, owing to the said arrangement at an angle in plan view with respect to the belt to be cleaned, progressively brings into contact with this main belt portions thereof which are always clean and which, after contact, move away from the main belt with a vectorial component which is both longitudinal and transverse, the latter being opposite to the direction of feeding of the said main belt, thus preventing accumulation of the removed paint on the secondary belt.

This solution has the drawback is that it is unable to achieve vigorous contact between the secondary cleaning belt and the main conveyor to be cleaned since the latter would tend to be deviated by the transverse thrust produced by the cleaning belt. Again as a result of this transverse action, the removed paint is displaced towards one side of the main conveyor, with the risk of contaminating this side and possibly also the inner surface of the said belt of the painting machine, unless solutions are adopted to avoid this problem.

The invention proposes a device which combines the solutions of the known devices considered above such that it offers the advantages of these devices but not their defects. The device according to the invention, as described in Claim 1 and the following depending claims, is essentially characterized by the use of a reverse roller making contact with the lower section of the main conveyor to be cleaned and by the use of a secondary conveyor belt, as per the second solution mentioned above, for cleaning the said reverse roller.

Further characteristic features of the invention and the advantages arising therefrom will emerge more clearly from the following description of a preferred embodiment thereof, illustrated purely by way of a non-limiting example in the figures of the accompanying sets of drawings in which:
- Fig. 1 shows a side elevation view of the device with parts cross-sectioned;
- Fig. 2 shows a top plan view of the device according to Figure 1;
- Fig. 3 shows further details of that end of the device which is provided with the means for transmission of the movement to the secondary belt for cleaning the reverse roller.

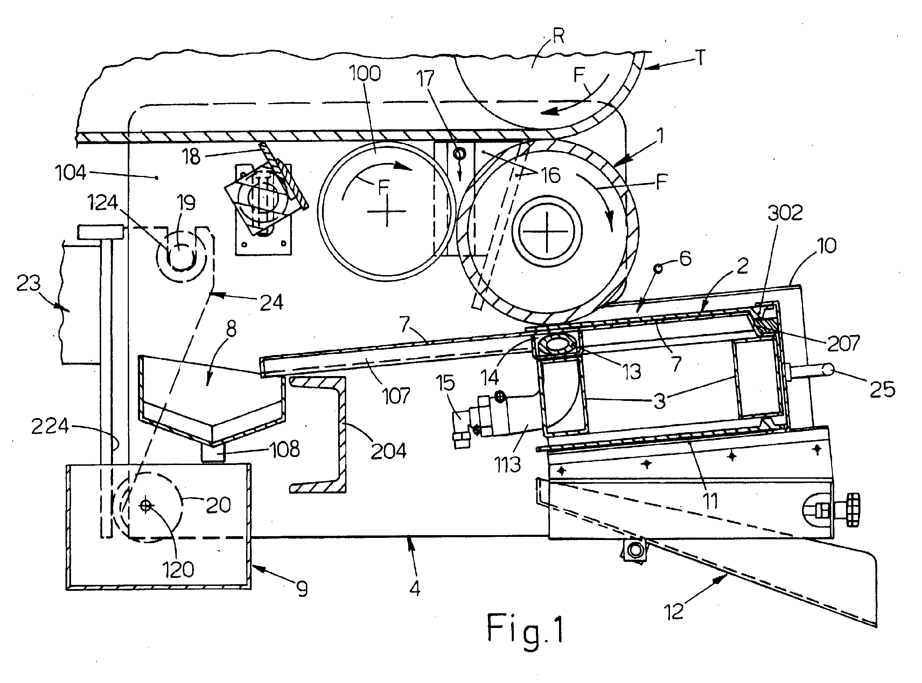

In a Figure 1, T denotes the conveyor of the painting machine and R denotes the end drive roller of this conveyor underneath which the reverse roller 1 operates in a parallel arrangement making contact with the said conveyor, said reverse roller being made of chrome-plated steel and rotating in the same direction F of rotation as the drive roller R, so as to operate on the lower section of the conveyor T with an action opposing the feeding movement of this section, so as to perform vigorous recovery of the paint and cleaning of the said conveyor by means of a vigorous action. It is understood that the scope of the invention also includes the solution where the reverse roller 1 operates in contact with a portion of the lower section of the conveyor T situated downstream of the end drive roller R and retained so that there is a suitable degree of interference with the same cleaning roller 1 by auxiliary drive means.

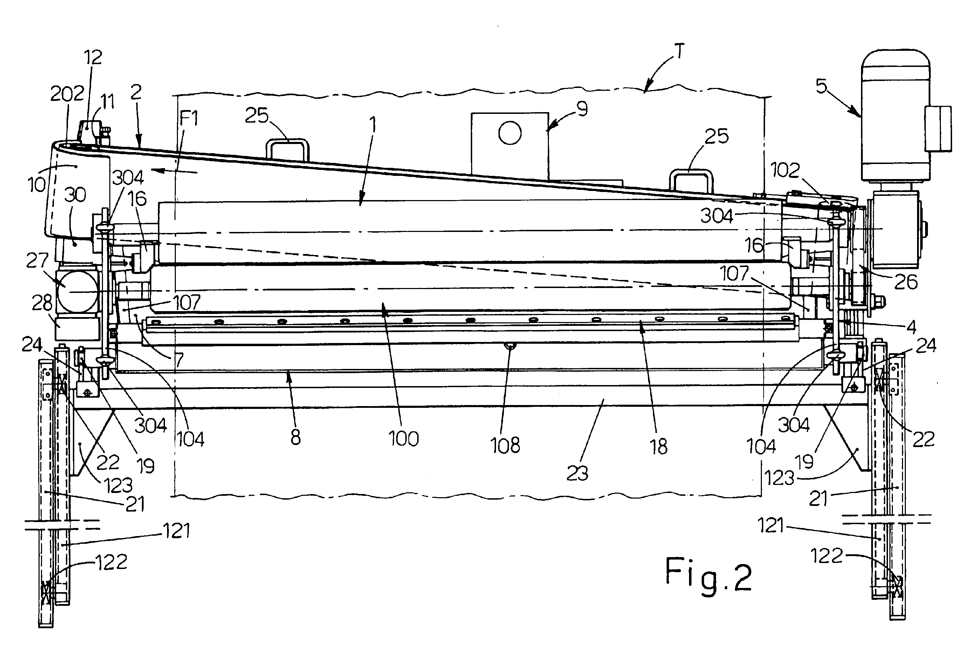

The upper section of a cleaning conveyor belt 2 operates by means of tangential contact with the generatrix of a bottom zone of the reverse roller 1, said cleaning conveyor belt being made of a suitable composite, flexible, material, for example such as that used for the main belt T, and being positioned with its longitudinal axis in the direction of the length of the roller 1 and having a length suitably greater than that of this roller 1. The conveyor 2 is supported by a strong longitudinal inner frame 3 which is fixed in any suitable manner to the parallel side walls 104 of the main frame 4 of the device which also rotatably supports the end spindles of the reverse roller 1 actuated by a gear motor unit 5 (Fig. 2) which is flanged with one of the said side walls 104 which are interconnected by at least one further cross-member 204, as can be seen in Figure 1. In Figure 2, 102 and 202 denote the drive rollers of the conveyor 2, the first of which rollers is driven idle and supported by a pair of tensioning plates fixed to the said frame 3, while the other roller 202 is motor-driven, is supported without adjustment by the said frame 3 and/or by a side support 30 (see below) fixed to the adjacent side wall 104 and is actuated by means which, for example, derive the rotational movement from the said gear motor 5 for rotation of the reverse roller 1, as will be described more fully below.

The upper section of the cleaning conveyor 2 travels in the direction indicated by the arrow F1 shown in Figure 2, namely in the direction of the motor-driven roller 202. From this figure it can be seen how the longitudinal axis of the cleaning conveyor 2 is inclined with respect to the axis of the reverse roller 1 so as to form an acute angle diverging towards the said motor-driven roller 202. The amount of this inclination depends on the width of the belt 2 since the upper section of this belt touches one end of the roller 1 with a portion close to its opposite side and touches the other end of the said reverse roller 1 with a portion close to its other side. As a result of this longitudinal inclination, the paint which the belt 2 detaches from the reverse roller 1 is gradually conveyed away from this roller 1, also with a component transverse to the direction of travel F1 of this belt, such that this paint covers the belt 2 in a gradual and uniform manner, substantially over its entire width, avoiding accumulation which instead occurs with the static scraping systems and ensuring rapid removal of the said paint, even though relatively dense.

From Figure 1 it is clear that the cleaning belt 2 is also characterized by an inclined position of its upper section with respect to the horizontal plane, since this section forms with the ideal vertical plane which passes through the contact zone between belt 2 and reverse roller 1 an angle of less than 90°. This transverse inclination has the effect that the paint removed by the belt 2 remains owing to the effect of gravity on the said belt and allows, where necessary, the introduction, via specific supply means 6, of a small continuous quantity of solvent into the contact zone between belt 2 and roller 1, in order to facilitate removal of the paint by the said belt 2. The upper section of the belt 2 travels over a sufficiently flexible surface 7 which is made of metal and/or other suitable material and which interacts with the said belt over the entire length of the upper roller 1 and which projects from the ends of this roller with sections of suitable length, where the said surface 7 has transverse gutter channels 107 and the same surface 7 projects by a suitable amount laterally from the bottom side of the conveyor 2 and terminates with the said channels 107 above a collection tank 8 which is fixed to the frame via the side walls 104 and the bottom wall of which has an inclination for example in the form of a double surface sloping downwards, with a discharge outlet 108 at the lowest point, for evacuating the liquid which drips from above (see below) into a collection tank 9 provided with recirculation pumps (not shown) and positioned in any suitable manner underneath the device in question. The part which remains attached to the upper section of the conveyor 2 passes beyond the drive roller 202 where an anti-spray casing 10 is provided and on the lower return section of the said conveyor 2 the said paint is detached for example by means of at least one transverse and inclined doctor blade 11, with an active part made of an elastomer, a suitable plastic or spring steel. The paint detached by the doctor blade 11 falls into a hopper 12 into which the bottom edge of the said casing 10 drains and from this hopper the said paint is discharged into a container or into other suitable collection and removal means, not shown.

In order to prevent the upper section of the conveyor 2 from being deviated by the thrust exerted transversely thereon by the reverse roller 1, the said belt 2 is provided internally, on the higher side, with a raised bead 302, for example with a trapezoidal cross-section, which is solid and continuous or formed by a succession of teeth, as in drive belts, said bead sliding guided inside corresponding annular grooves of the drive rollers 102 and 202 and at least along the upper section of the said conveyor 2 sliding inside a guide groove of suitable cross-section 207 formed longitudinally in the highest part of the portion with which the laminated surface 7 is fixed to the frame 3 supporting the conveyor 2.

Still with reference to Figure 1, it can be seen that, in order to ensure uniformly distributed contact between the upper section of the flexible cleaning belt 2 and the reverse roller 1, the belt portion 2 which must make contact with the generatrix of the said roller 1 is pushed against this roller by a corresponding portion of the flexible laminated surface 7 which is acted on underneath by a pressing device formed for example by a flexible tube 13 inflated with pressurised fluid, for example with air at suitable pressure values, and this tube is arranged inside a channel 14 fixed onto the frame 3 and situated underneath the surface 7. It is understood that the scope of the invention also includes the constructional variants where the sliding surface 7 may be perfectly rigid and flat or which envisage the use of means other than the inflatable tube 13, for example a rigid and/or spring-loaded pressing device, using solutions known for example in the sector of devices for cleaning the rollers of rotary printing machines.

Purely by way of a non-limiting example of the scope of protection of the invention, from the figures it can be seen that, parallel to and downstream of the reverse roller 1, there may be provided a second roller 100 for cleaning the lower section of the main conveyor T, which has a length slightly greater than that of the said roller 1, is for example chrome-plated or lined with a fabric or cloth with suitable characteristics, also rotates in the direction F of the reverse roller 1 and is situated at a very small distance and/or so as to make substantially light contact with the latter, so that in the zone of mutual contact the two rollers are in any case able to move in opposite directions, without a negative reaction. This solution of using several reverse rollers arranged alongside each other and in succession is for example of the type described in document No. EP 1136399 in the name of the same applicant and in subsequent improvement patents. The roller 100 is also rotatably supported at the ends by the said side walls 104 and the ends of the two rollers 1 and 100 may, for example, be provided with closing shoulders 16 which operate in substantial contact with the ends of the said two rollers and with the lower section of the conveyor T, so as to define a tank which has limited contact with the external environment and is situated very close to the main conveyor T and into which solvent is continuously introduced by at least one supply pipe 17. Part of this solvent falls downwards through the free space existing between the rollers 1 and 100 and is collected by the surface 7 which conveys it by means of gravity into the collection tank 8. Part of the same solvent introduced by the pipe 17 is conveyed upwards by the rising surface of the reverse roller 1, in order to facilitate the removal of paint performed by this roller and in order to soften the residual paint which remains on the main conveyor T, so that it may then be more easily removed by the finishing roller 100 which, as mentioned, also operates with an action of the reverse type. Another part of said solvent supplied by the pipe 17 follows the surface of the roller 100 and facilitates the finishing action of this component. Part of the solvent transported by the roller 100 remains inevitably on the main conveyor T in order to soften any residual paint and is removed by a doctor blade 18 which with its ends is mounted on the side walls 104 with the arrangement, in between, of known adjustment means which allow adjustment of the degree of interference between doctor blade and belt, also in order to compensate for gradual wear of the said doctor blade.

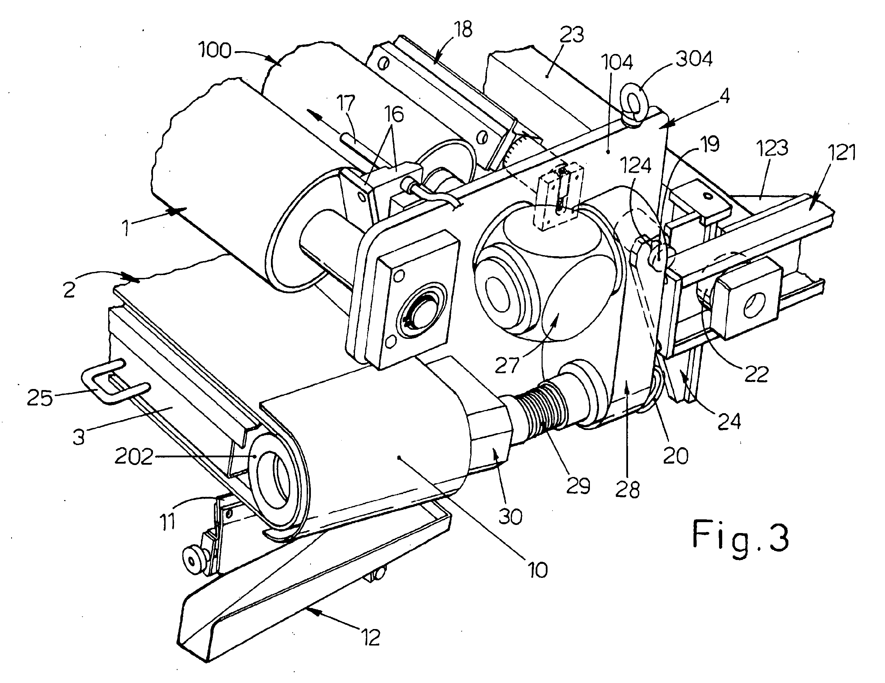

From the figures it can be seen that, for removable fastening to the painting machine, the side walls 104 of the frame 4 for supporting the device in question may for example be provided externally, on the end side for entry into the said painting machine, with lateral grooved pins which have a groove 19 and corresponding roller wheels 20 at a lower level (Figs. 1, 3). The painting machine may be provided, for example, on its side walls (Fig. 2) with horizontal guides 21 with a C-shaped profile which are directed with the hollow part towards each other and which with the outermost end carry, projecting on their inner side, composite wheels 22, for example of the radial-axis type, which travel inside corresponding guides 121 with a C-shaped profile, identical to the guides 21, and which in turn on their end inside the painting machine carry composite wheels 122 which are also of the radial-axis type and travel inside the said guides 21. The guides 121 are interconnected by at least one cross-member 23 which is fixed via special diagonal end plates 123 to the inner sides of the said guides 121, and the ends of this cross-member 23 have, transversely fixed thereto, supports 24 which are provided with an upper groove 124 for centred engagement the said grooved pins 19 and provided with vertical flat tracks 224 on which the said wheels 20 slide and rest. Special adjustment means may be provided on the wheels 20 and/or on the said pins 19, for example in the form of cam-type supports for the said components, in order to ensure precise operating conditions of the device, also in the case where the said device and the means which constrain it in a movable manner to the painting machine have not been constructed in a absolutely precise manner. The side of the frame 3 which is directed outwards is provided, for example, with handles 25 which may be used by the operator to extract the device from the painting machine, for any verification and maintenance purposes and so as to allow subsequent reinsertion of the device in the operating position, locking means (not shown) which can be released if necessary being provided for this purpose in order to keep the device correctly in the operating position or allow extraction thereof.

As mentioned above, it is possible to envisage specific means for simplifying driving of all the components of the device, the driving power being derived for example from a gear motor 5. Purely by way of a non-limiting example, for the aforementioned purpose it is possible to envisage the use of a drive 26 for example of the toothed pulley and belt type (Fig. 2) for transmitting the rotational movement from the reverse roller 1 to the roller 100, while on the side of the device the rotational movement may be obtained from the roller 100 via an angular drive 27 and then a transmission 28 with parallel axes perpendicular to the rollers 1, 100 from where there extends a transmission with shaft and Cardan joints 29 also mounted on a support 30 which may for example help rotatably support the driving pulley 202 of the cleaning belt 2.

It is understood that the description refers to a preferred embodiment of the invention, with omission of the details relating to the electrical system for powering the gear motor 5 and the various safety systems of the device, since they may be easily deduced and realized by persons skilled in the art.

## Claims

1. Device for cleaning from a conveyor belt (T), driven on rollers, fluid substances sprayed thereon, in particular for machines for spraying paint or other products, of the type which comprises a reverse roller (1) which is a steel cylinder or roller with a smooth surface, which operates on the return section of the conveyor (T) with a parallel arrangement for example facing the end drive roller (R) of the said conveyor and which rotates in a direction opposite to the direction of feeding of the return section of the said conveyor, so as to perform effective shaving-off of the residual paint which is detached by scraping means from this reverse roller (1) and collected inside a recovery tank, **characterised in that** these scraping means act on the generatrix of a bottom zone of the said reverse roller (1) and consistent of corresponding longitudinal portion of the upper section of a cleaning conveyor belt (2) made of suitable composite flexible material, for example similar to that used for the said main conveyor (T), and situated with its longitudinal axis in the direction of the length of the reverse roller (1).

2. Device according to Claim 1, in which the said cleaning conveyor belt (2) has a length suitably greater than that of the said reverse roller (1) so as to project from the latter with suitable end portions and the said cleaning belt (2) is inclined transversely with respect to the horizontal plane, so as to form with the reverse roller (1) a suitable collection tank which is open at the ends, and is also inclined with respect to the axis of the said reverse roller (1) such that most of the width of the upper section of the cleaning belt is involved in co-operation with the reverse roller (1), the said cleaning belt (2) being continuously operated by means such that its upper section travels in the direction (F1) along which the longitudinal axis of this belt (2) gradually diverges from the axis of the reverse roller so that the paint removed from the reverse roller is rapidly conveyed away from this roller.

3. Device according to one or more of the preceding claims, **characterized in that** it also comprises:
- means for cleaning the return section of the said cleaning belt (2);
- means for preventing transverse movements of this cleaning belt (2);
- means for collecting and channelling the paint from the reverse roller and from the said cleaning belt (2) towards recovery means;
- means for ensuring suitable and uniform contact pressure between the upper section of the said cleaning belt (2) and the reverse roller (1), so as to ensure effective cleaning of this roller.

4. Device according to one or more of the preceding claims, **characterized in that** it comprises, if necessary, at least one nozzle (6) for introducing solvent into the said tank which is open at the ends and formed by the cleaning belt (2) inclined transversely and by the reverse roller (1), in order to facilitate separation of the paint from this roller by the said belt (2).

5. Device according to one or more of the preceding claims, in which the cleaning conveyor belt (2) is supported by a strong longitudinal inner frame (3) fixed to the parallel side walls (104) of the main frame (4) of the device, which also rotatably support the end spindles of the reverse roller (1) and which are interconnected by at least one further cross-member (204), the drive rollers (102, 202) of the said cleaning belt (2) being supported by the ends of the said frame (3) via pairs of plates which are partly fixed and partly adjustable, and it being envisaged that the upper section of the said cleaning belt (2) travels over a surface (7) which is made of metal and/or other suitable material and which interacts with the belt over the entire length of the upper roller (1) and projects from the latter with end sections where this surface has transverse gutter channels (107) and the said surface (7) projects by a suitable amount laterally from the bottom side of the cleaning belt (2) and terminates above a collection tank (8) which is fixed to the main frame (4) of the device and the bottom all of which has an inclination in the form of a surface sloping downwards, with at least one discharge outlet (108) at the lowest point, for evacuating the liquid which drips from above, into a collection tank (9) situated underneath the device in question.

6. Device according to one or more of the preceding claims, **characterized by** preventing the upper section of the cleaning belt (2) from being deviated by the thrust exerted transversely thereon by the reverse roller (1), the said belt (2) being provided internally, on the higher side, with at least one raised bead (302) which slides guided inside corresponding angular grooves in the drive rollers (102, 202) of this belt (2) and which, at least along the upper section of this cleaning belt (2) slides inside a guide channel (207) formed longitudinally in the higher part of the portion with which the said surface (7) is fixed to the frame (3) supporting the cleaning conveyor belt (2).

7. Device according to any one or more of the preceding claims, in which a curved anti-spray casing (10) is provided opposite the end drive roller (202) of the cleaning conveyor belt (2) and the lower return section of the said belt (2) is acted on by at least one doctor blade and/or other suitable means (11) which detaches the paint from this belt and causes it to fall into a hopper (12) into which the paint from the bottom edge of the said casing (10) also drips and from this hopper the same paint falls into a container or into other suitable collection and removal means.

8. Device according to any one or more of the preceding claims, **characterized in that**, in order to ensure a uniformly distributed contact between the upper section of the flexible cleaning belt (2) and the reverse roller (1), the portion of the belt (2) which must make contact with the generatrix of the said roller (1) is pushed against this roller by a corresponding portion of the underlying surface (7) which is formed wholly or partly with flexibility characteristics and which has, acting underneath it, a pressing device formed, for example, by flexible tube (13) inflated with pressurised fluid, for example air at suitable pressure values, and this tube is arranged inside a channel (14) fixed onto the said frame (3) supporting the conveyor belt (2) and parallel to the contact zone between the belt (2) and the reverse roller (1).

9. Device according to Claim 8, **characterized in that**, according to a constructional variant, the surface (7) on which the upper section of the cleaning belt (2) slides may be perfectly rigid and flat, at least in the zone where it makes contact with this belt.

10. Device according to Claim 8, in which means other than the said inflatable tube (13), for example a rigid and/or spring-loaded pressing device, may be adopted using solutions known for example in the sector of devices for cleaning the rollers of rotary printing machines.

11. Device according to one or more of the preceding claims, **characterized in that** a second roller (100) for cleaning the lower section of the main conveyor (T) may be provided parallel to and downstream of the reverse roller (1), with a length slightly greater than that of the said reverse roller (1), which roller is, for example, lined with fabric or cloth with suitable characteristics, also rotates in the direction of the reverse roller (1) and is situated at a very small distance and/or so as to make substantially light contact with the latter such that, in the zone of mutual contact, the two rollers may in any case move in opposite directions, without a negative reaction, this second roller (100) also being rotatably supported at the ends by the side walls (104) of the main frame (4) of the device and the ends of the two adjacent rollers (1, 100) may be provided with closing shoulders (16) which operate in substantial contact with the ends of the said rollers and with the lower section of the main conveyor (T) so as to define a tank which has limited contact with the external environment and is very close to the said main conveyor (T) and into which solvent is introduced continuously by at least one supply pipe (17), said solvent partly falling through the free space existing between the two rollers (1, 100) and partly being collected by the underlying surface (7) which conveys it by means of gravity into the collection tank (8), while another part of the said solvent is transported upwards by the rising surface of the reverse roller (1), in order to facilitate the removal of paint performed by this roller and soften the residual paint which remains on the main belt (T) so that said paint may subsequently be more easily removed by the finishing roller (100), while a further part of the said solvent follows the surface of the second roller (100) and facilitates finishing of this component and partly remains on the main conveyor (T) so as to soften any residual paint which is then definitively removed by a finishing doctor blade (18) which is mounted with its ends on the said side walls (104) via known adjustment means arranged in between.

12. Device according to one or more of the preceding claims, **characterized in that** it comprises means for simplifying driving of all the rotating components, the driving power being derived, for example, from the gear motor (5) which actuates the reverse roller (1), a drive (26) for example of the belt and toothed-pulley type being provided for this purpose for transmitting the rotational movement from the reverse roller (1) to the downstream roller (100), while on the other side of the device the rotational movement is obtained from this second roller (100) by means of an angular drive (27) and then a transmission (28) with axes parallel to each other and perpendicular to the said rollers (1, 100), from where there extends a transmission with shaft and Cardan joints (29) also mounted on the support (30) which may also assist rotational supporting of the drive pulley (202) of the cleaning conveyor belt (2).

13. Device according to one or more of the preceding claims, **characterized in that** it may be mounted on the painting machine and the side walls (104) of the frame (4) may be provided externally, on the entry side into the painting machine, with lateral grooved pins (19) and corresponding roller wheels (20) at a lower level, while the painting machine is provided on its side walls with horizontal guides (21) with a C-shaped profile, which are directed with the hollow part towards each other and which with the outermost end support, projecting on their inner side, composite wheels (22) which travel inside corresponding guides (121) with a C-shaped profile, which are identical to the aforementioned said guides (21) and which in turn carry on their end inside the painting machine composite wheels (122) which travel inside the said guides (21), the said guides (121) being interconnected by at least one cross-member (23) fixed to the inner sides of these guides (121) and the ends of this cross-member (23) having, fixed transversely thereto, supports (24) provided with an upper groove (124) for centred engagement with the said grooved pins (19) and provided with vertical and flat tracks (224) on which the said wheels travel and rest (20).

14. Device according to Claim 13, **characterized in that** it comprises adjustment means for example of the cam type, for allowing precise adjustment of the condition of the said device, for example for adjusting with precision the interference between the reverse roller (1) and the conveyor to be cleaned (T) of the painting machine

## Patentansprüche

1. Vorrichtung zum Reinigen von Fluidsubstanzen, die auf ein auf Walzen getriebenes Band gesprüht wurden, insbesondere für Maschinen zum Aufsprühen von Farbe oder anderen Produkten vom Typ, der eine Umlenkwalze (1) aufweist, die ein Stahlzylinder oder eine Walze mit einer glatten Oberfläche ist, welche auf dem Rücklaufabschnitt des Bandes (T) mit einer parallelen Anordnung arbeitet, z. B. unter Gegenüberstellen der Endantriebswalze (R) des Förderers, und welche in einer Richtung entgegengesetzt der Zuführrichtung des Rücklaufabschnittes des Bandes rotiert, um ein wirksames Abschaben der restlichen Farbe vorzunehmen, die durch Abkratzmittel von dieser Umlenkwalze (1) entfernt und innerhalb eines Regenerierungstanks gesammelt wird, **dadurch gekennzeichnet, dass** diese Abkratzmittel auf die Erzeugende einer Bodenzone der Unlenkwalze (1) einwirken in Einklang mit einem entsprechenden Längsteil des oberen Abschnittes eines Reinigungsförderbandes (2), welches aus geeignetem, flexiblem Verbundmaterial hergestellt ist, z. B. ähnlich jenem, welches für den Hauptförderer (T) verwendet wird, wobei es mit seiner Längsachse in der Längsrichtung der Umlenkwalze (1) angeordnet ist.

2. Vorrichtung nach Anspruch 1, bei welcher das Reinigungsförderband (2) eine Länge hat, die passend größer ist als die der Umlenkwalze (1), um mit passenden Endteilen von letzterer vorzustehen, und das Reinigungsband (2) schräg zu der horizontalen Ebene geneigt ist, um mit der Umlenkwalze (1) einen geeigneten Sammeltank zu bilden, der an den Enden offen ist, und auch bezüglich der Achse der Umlenkwalze (1) derart geneigt ist, dass das meiste der Breite des oberen Abschnittes des Reinigungsbandes an einem Zusammenwirken mit der Umlenkwalze (1) beteiligt ist, wobei das Reinigungsband (2) fortlaufend von Mitteln derart betätigt wird, dass ihr oberer Abschnitt in der Richtung (F1) läuft, längs welcher die Längsachse dieses Bandes (2) allmählich von der Achse der Umlenkwalze divergiert, so dass die von der Umlenkwalze entfernte Farbe schnell von dieser Walze weggefördert wird.

3. Vorrichtung nach einem oder mehreren der vorhergehenden Ansprüche, **dadurch gekennzeichnet, dass** sie auch aufweist:
- Mittel zum Reinigen des Rücklaufabschnittes des Reinigungsbandes (2);
- Mittel zum Verhindern von Querbewegungen dieses Reinigungsbandes (2);
- Mittel zum Sammeln und Leiten der Farbe von der Umlenkwalze und von dem Reinigungsband (2) zu Regenerierungsmitteln hin;
- Mittel zum Sicherstellen eines geeigneten und gleichmäßigen Kontaktdruckes zwischen dem oberen Abschnitt des Reinigungsbandes (2) und der Umlenkwalze (1), um eine wirksame Reinigung dieser Walze sicherzustellen.

4. Vorrichtung nach einem oder mehreren der vorhergehenden Ansprüche, **dadurch gekennzeichnet, dass** sie notwendigenfalls mindestens eine Düse (6) aufweist zum Einführen eines Lösungsmittels in den Tank, der an den Enden offen ist und durch das Reinigungsband (2) mit einer Querneigung und durch die Umlenkwalze (1) gebildet ist, um eine Trennung der Farbe von dieser Walze durch das Band (2) zu ermöglichen.

5. Vorrichtung nach einem oder mehreren der vorhergehenden Ansprüche, bei welcher das Reinigungsförderband (2) von einem festen, länglichen inneren Rahmen (3) gehalten wird, der an den parallelen Seitenwänden (104) des Hauptrahmens (4) der Vorrichtung befestigt ist, welche auch die Endachszapfen der Umlenkwalze (1) drehbar abstützen und durch mindestens ein weiteres Querteil (204) verbunden sind, wobei die Antriebswalzen (102, 202) des Reinigungsbandes (2) von den Enden des Rahmens (3) über Paare von Platten gehalten sind, die teilweise fest und teilweise einstellbar sind, wobei ins Auge gefasst ist, dass der obere Abschnitt des Reinigungsbandes (2) über eine Oberfläche (7) läuft, die aus Metall und/oder einem anderen geeigneten Material hergestellt ist und über die gesamte Länge der oberen Walze (1) mit dem Band zusammenwirkt und von letzterer mit Endabschnitten übersteht, wo diese Oberfläche quer verlaufende Ablaufrinnenkanäle (107) hat und die Oberfläche (7) um einen passenden Betrag seitlich von der Bodenseite des Reinigungsbandes (2) übersteht und über einem Sammeltank (8) endet, der an dem Hauptrahmen (4) der Vorrichtung befestigt ist, wobei der Boden all dieser Teile eine Neigung in der Form einer nach unten schräg verlaufenden Oberfläche hat mit mindestens einem Abgangsauslass (108) am untersten Punkt für das Entleeren der von oben tropfenden Flüssigkeit in einen Sammeltank (9), der unter der in Rede stehenden Vorrichtung angeordnet ist.

6. Vorrichtung nach einem oder mehreren der vorhergehenden Ansprüche, **dadurch gekennzeichnet , dass** verhindert wird, dass der obere Abschnitt des Reinigungsbandes (2) durch den Druck abgelenkt wird, welcher von der Umlenkwalze (1) quer auf diesen ausgeübt wird, wobei das Band (2) innen auf der höheren Seite mit mindestens einer erhabenen Wulst (302) versehen ist, die unter Führung innerhalb entsprechender Winkelnuten in den Umlenkwalzen (102, 202) dieses Bandes (2) gleitet und mindestens längs des oberen Abschnittes dieses Reinigungsbandes (2) innerhalb eines Führungskanals (207) gleitet, der längs in dem höheren Teil desjenigen Teils gebildet ist, bei welchem die Oberfläche (7) an dem das Reinigungsförderband (2) haltenden Rahmen (3) befestigt ist.

7. Vorrichtung nach einem oder mehreren der vorhergehenden Ansprüche, bei welcher ein gekrümmtes Antisprüh-Gehäuse (10) gegenüber der Endantriebswalze (202) des Reinigungsförderbandes (2) vorgesehen ist und auf den unteren Rücklaufabschnitt des Bandes (2) durch mindestens ein Abstreifmesser bzw. eine Rakel und/oder ein anderes geeignetes Mittel (11) eingewirkt wird, welches die Farbe von diesem Band entfernt und sie in einen Trichter (12) hinein fallen lässt, in welchen die Farbe von der Bodenkante des Gehäuses (10) auch tropft, und von diesem Trichter dieselbe Farbe in einen Behälter oder in andere geeignete Sammel- und Entsorgungsmittel fällt.

8. Vorrichtung nach einem oder mehreren der vorhergehenden Ansprüche, **dadurch gekennzeichnet, dass** zum Sicherstellen eines gleichmäßig verteilten Kontaktes zwischen dem oberen Abschnitt des flexiblen Reinigungsbandes (2) und der Umlenkwalze (1) der Teil des Bandes (2), welcher mit der Erzeugenden der Walze (1) Kontakt machen muss, gegen diese Walze durch einen entsprechenden Teil der darunterliegenden Oberfläche (7) gedrückt wird, welcher vollständig oder teilweise mit Flexibilitätseigenschaften gebildet ist und der unter Einwirken auf diesen eine Pressvorrichtung hat, die z. B. durch einen flexiblen Schlauch (13) gebildet ist, der mit einem Druckfluid aufgeblasen ist, z. B. Luft mit geeignetem Druck, wobei dieser Schlauch innerhalb eines Kanals (14) angeordnet ist, der auf dem das Förderband (2) halternden Rahmen (3) und parallel zu der Kontaktzone zwischen dem Band (2) und der Umlenkwalze (1) befestigt ist.

9. Vorrichtung nach Anspruch 8, **dadurch gekennzeichnet, dass** entsprechend einer Konstruktionsvariante die Oberfläche (7), auf welcher der obere Abschnitt des Reinigungsbandes (2) gleitet, mindestens in der Zone perfekt starr und flach sein kann, wo sie mit diesem Band Kontakt hat.

10. Vorrichtung nach Anspruch 8, bei welcher andere Mittel als der aufblasbare Schlauch (13), z. B. eine starre und/oder abgefederte Druckvorrichtung unter Verwendung von Lösungen übernommen werden kann, die z. B. auf dem Gebiet von Vorrichtungen zum Reinigen von Walzen bzw. Rollen von Rotationsdruckmaschinen bekannt sind.

11. Vorrichtung nach einem oder mehreren der vorhergehenden Ansprüche, **dadurch gekennzeichnet, dass** eine zweite Walze (100) zum Reinigen des unteren Abschnittes des Hauptförderers (T) parallel zu der Umlenkwalze (1) und abstromig von dieser vorgesehen sein kann mit einer Länge, die etwas größer ist als jene der Umlenkwalze (1), wobei diese Walze z. B. mit Stoff oder Tuch mit geeigneten Eigenschaften belegt ist und auch in Richtung der Umlenkwalze (1) rotiert und in einem sehr kleinen Abstand und/oder so angeordnet ist, dass mit letzterer ein merklich schwacher Kontakt derart hergestellt wird, dass in der Zone gegenseitiger Berührung die zwei Walzen sich jedenfalls in entgegen gesetzten Richtungen bewegen können ohne eine negative Reaktion, wobei diese zweite Walze (100) an den Enden auch durch die Seitenwände (104) des Hauptrahmens (4) der Vorrichtung drehbar gehaltert ist und die Enden der zwei benachbarten Walzen (1, 100) mit Schließschultern (16) versehen sein können, die in erheblichem Kontakt mit den Enden der Walzen und mit dem unteren Abschnitt des Hauptförderers (T) arbeiten, um einen Tank zu bilden, der mit der äußeren Umgebung einen begrenzten Kontakt hat und sehr dicht an dem Hauptförderer (T) liegt und in welchen Lösungsmittel kontinuierlich durch mindestens ein Zuführrohr (17) eingeführt wird, wobei das Lösungsmittel teilweise durch den zwischen den zwei Walzen (1, 100) befindlichen freien Raum fällt und teilweise von der darunter liegenden Oberfläche (7) gesammelt wird, welche es mittels Schwerkraft in den Sammeltank (8) hinein fördert, während ein anderer Teil des Lösungsmittels von der ansteigenden Oberfläche der Umlenkwalze (1) nach oben transportiert wird, um das Entfernen von Farbe, welches von dieser Walze geleistet wird, zu erleichtern und die restliche Farbe aufzuweichen, die auf dem Hauptband (T) verbleibt, so dass die Farbe danach leichter von der Endbehandlungswalze (100) entfernt werden kann, während ein weiterer Teil des Lösungsmittels der Oberfläche der zweiten Walze (100) folgt und die Endbehandlung dieser Komponente ermöglicht und teilweise auf dem Hauptförderer (T) bleibt, um irgendeine Restfarbe aufzuweichen, welche dann endgültig von einer Endbearbeitungsrakel (18) entfernt wird, die mit ihren Enden auf den Seitenwänden (104) über bekannte dazwischen angeordnete Einstellmittel angebracht ist.

12. Vorrichtung nach einem oder mehreren der vorhergehenden Ansprüche, **dadurch gekennzeichnet, dass** sie Mittel aufweist zur Vereinfachung des Antriebes aller Drehkomponenten, wobei die Antriebskraft z. B. von dem Getriebemotor (5) abgeleitet wird, welcher die Umkehrwalze (1) antreibt, wobei ein Antrieb (26) z. B. vom Riemen- oder Zahnriementyp für diesen Zweck zum Übertragen der Drehbewegung von der Umlenkwalze (1) auf die abstromige Walze (100) vorgesehen ist, während auf der anderen Seite der Vorrichtung die Drehbewegung von dieser zweiten Walze (100) mittels eines Winkelantriebs (27) und dann einer Transmission (28) mit Achsen erhalten wird, die parallel zueinander und senkrecht zu den Walzen (1, 100) liegen, von wo sich eine Transmission mit Welle und Kardangelenken (29) erstreckt, die auch auf der Halterung (30) angebracht sind, die auch bei der Drehabstützung der Antriebsriemenscheibe (202) des Reinigungsförderbandes (2) hilft.

13. Vorrichtung nach einem oder mehreren der vorhergehenden Ansprüche, **dadurch gekennzeichnet, dass** sie auf der Färbemaschine angebracht sein kann und die Seitenwände (104) des Rahmens (4) außen auf der Eingangsseite in die Färbemaschine hinein mit seitlichen Nutenstiften (19) und entsprechenden Walzenrädern (20) auf niedriger Höhe vorgesehen sein kann, während die Färbemaschine auf ihren Seitenwänden mit horizontalen Führungen (21) mit C-förmigem Profil versehen ist, die mit dem hohlen Teil aufeinander zu gerichtet sind und die mit dem äußersten Ende mit Überstand auf ihrer Innenseite zusammengesetzte Räder (22) abstützen, welche innerhalb entsprechender Führungen (121) mit einem C-förmigen Profil laufen, die mit den vorgenannten Führungen (21) identisch sind und ihrerseits auf ihrem Ende in der Färbemaschine zusammengesetzte Räder (122) tragen, die innerhalb der Führungen (21) laufen, wobei die Führungen (121) durch mindestens ein Querteil (23) verbunden sind, die an den Innenseiten dieser Führungen (121) befestigt sind, und die Enden dieses Querteiles (23) mit Queranbringung an diesem Halterungen (24) haben, die mit einer oberen Nut (124) für den zentrierten Eingriff mit den Nutenstiften (19) versehen sind und die mit vertikalen und flachen Laufbahnen (224) versehen sind, auf welchen die Räder laufen und gegen welche sie sich abstützen (20).

14. Vorrichtung nach Anspruch 13, **dadurch gekennzeichnet, dass** sie Einstellmittel z. B. vom Nockentyp aufweist, um ein präzises Einstellen des Zustandes der Vorrichtung zu ermöglichen, z. B. zum präzisen Einstellen der Beeinflussbarkeit zwischen der Umlenkwalze (1) und dem zu reinigenden Förderer (T) der Färbemaschine.

## Revendications

1. Dispositif de nettoyage, sur une bande de convoyeur (T), entraînée sur des rouleaux, de substances fluides pulvérisées dessus, en particulier, pour des machines destinées à pulvériser de la peinture ou d'autres produits, du type qui comprend un rouleau inversé (1) qui est un cylindre ou rouleau en acier avec une surface lisse, qui agit sur la section de retour du convoyeur (T) avec un agencement parallèle faisant, par exemple, face au rouleau d'entraînement final (R) dudit convoyeur et qui tourne dans un sens opposé au sens d'alimentation de la section de retour dudit convoyeur, de manière à réaliser un rasage efficace de la peinture résiduelle qui est séparée par des moyens de raclage de ce rouleau inversé (1) et collectée à l'intérieur d'un réservoir de récupération, **caractérisé en ce que** ces moyens de raclage agissent sur la génératrice d'une zone inférieure dudit rouleau inversé (1) et consistent en une partie longitudinale correspondante de la section supérieure d'une bande de convoyeur de nettoyage (2) réalisée en un matériau flexible composite approprié, par exemple, similaire à celui utilisé pour ledit convoyeur principal (T), et agencée avec son axe longitudinal dans le sens de la longueur du rouleau inversé (1).

2. Dispositif selon la revendication 1, dans lequel ladite bande de convoyeur de nettoyage (2) présente, de manière appropriée, une longueur supérieure à celle dudit rouleau inversé (1) de manière à s'étendre en saillie à partir de ce dernier avec des parties d'extrémité appropriées et ladite bande de nettoyage (2) est inclinée transversalement par rapport au plan horizontal, afin de former avec le rouleau inversé (1) un réservoir de collecte approprié qui est ouvert aux extrémités, et est aussi incliné par rapport à l'axe dudit rouleau inversé (1) de telle sorte que la plus grande partie de la largeur de la section supérieure de la bande de nettoyage est impliquée dans la coopération avec le rouleau inversé (1), ladite bande de nettoyage (2) étant commandée en continu par des moyens de telle sorte que sa section supérieure se déplace dans la direction (F1) suivant laquelle l'axe longitudinal de cette bande (2) diverge progressivement par rapport à l'axe du rouleau inversé de telle sorte que la peinture retirée du rouleau inversé est rapidement transférée à l'écart de ce rouleau.

3. Dispositif selon une ou plusieurs des revendications précédentes, **caractérisé en ce que** il comprend aussi :
- des moyens destinés à nettoyer la section de retour de ladite bande de nettoyage (2) ;
- des moyens destinés à empêcher les mouvements transversaux de cette bande de nettoyage (2) ;
- des moyens destinés à collecter et à canaliser la peinture provenant du rouleau inversé et de ladite bande de nettoyage (2) vers le moyen de récupération ;
- des moyens destinés à assurer une pression de contact appropriée et uniforme entre la section supérieure de ladite bande de nettoyage (2) et le rouleau inversé (1), de manière à assurer un nettoyage efficace de ce rouleau.

4. Dispositif selon une ou plusieurs des revendications précédentes, **caractérisé en ce qu'**il comprend, si nécessaire, au moins un injecteur (6) afin d'introduire un solvant dans ledit réservoir qui est ouvert aux extrémités et est formé par la bande de nettoyage (2) inclinée transversalement et par le rouleau inversé (1), dans le but de faciliter la séparation de la peinture de ce rouleau par ladite bande (2).

5. Dispositif selon une ou plusieurs des revendications précédentes, dans lequel la bande de convoyeur de nettoyage (2) est supportée par un châssis interne longitudinal résistant (3) fixé sur les parois latérales parallèles (104) du châssis principal (4) du dispositif, qui supporte aussi avec liberté de rotation les broches d'extrémité du rouleau inversé (1) et qui sont interconnectées par au moins un autre élément transversal (204), les rouleaux d'entraînement (102, 202) de ladite bande de nettoyage (2) étant supportés par les extrémités dudit châssis (3) par l'intermédiaire de paires de plaques qui sont partiellement fixées et partiellement réglables, et il est envisagé que la section supérieure de ladite bande de nettoyage (2) se déplace au-dessus d'une surface (7) qui est réalisée en un métal et/ou autre matériau approprié et qui interagit avec la bande sur la totalité de la longueur du rouleau supérieur (1) et s'étend à partir de ce dernier avec des sections d'extrémité sur lesquelles cette surface présente des canaux de gouttière transversaux (107) et ladite surface (7) s'étend latéralement sur une distance appropriée à partir de la face inférieure de la bande de nettoyage (2) et s'achève au-dessus d'un réservoir de collecte (8) qui est fixé sur le châssis principal (4) du dispositif et la partie inférieure, l'ensemble présente une inclinaison sous la forme d'une surface inclinée vers le bas, avec au moins un orifice de sortie d'évacuation (108) au point le plus bas, afin d'évacuer le liquide qui s'égoutte par le dessus, dans un réservoir de collecte (9) situé au-dessous du dispositif concerné.

6. Dispositif selon une ou plusieurs des revendications précédentes, **caractérisé par** la prévention de la déviation de la section supérieure de la bande de nettoyage (2) par la poussée exercée transversalement sur celle-ci par le rouleau inversé (1), ladite bande (2) comportant sur sa surface interne, du côté le plus élevé, au moins une nervure surélevée (302) qui glisse, guidée à l'intérieur de rainures angulaires correspondantes, sur les rouleaux d'entraînement (102, 202) de cette bande (2) et qui, au moins le long de la section supérieure de cette la bande de nettoyage (2) glisse à l'intérieur d'un canal de guidage (207) formé longitudinalement sur la partie la plus haute de la partie avec laquelle ladite surface (7) est fixée sur le châssis (3) supportant la bande de convoyeur de nettoyage (2).

7. Dispositif selon une ou plusieurs des revendications précédentes, dans lequel un carter anti-pulvérisation courbe (10) est agencé à l'opposé du rouleau d'entraînement d'extrémité (202) de la bande de convoyeur de nettoyage (2) et la section de retour inférieure de ladite bande (2) est activée par au moins une lame de raclage et/ou autres moyens appropriés (11) qui séparent la peinture de cette bande et l'amène à tomber dans une trémie (12) dans laquelle la peinture provenant du bord inférieur dudit carter (10) s'égoutte aussi et, à partir de cette trémie, la même peinture tombe dans un conteneur ou dans d'autres moyens de collecte et d'élimination appropriés.

8. Dispositif selon une ou plusieurs des revendications précédentes, **caractérisé en ce que**, dans le but d'assurer un contact uniformément réparti entre la section supérieure de la bande de nettoyage flexible (2) et le rouleau inversé (1), la partie de la bande (2) qui doit entrer en contact avec la génératrice dudit rouleau (1) est poussée contre ce rouleau par une partie correspondante de la surface inférieure (7) qui est formée entièrement ou partiellement avec certaines caractéristiques de flexibilité, et sur laquelle, agissant par au-dessous, est formé un dispositif de pression, par exemple, par un tube flexible (13) gonflé avec un fluide pressurisé, par exemple, de l'air à des valeurs de pression appropriées, et ce tube est agencé à l'intérieur d'un canal (14) fixé sur ledit châssis (3) supportant la bande de convoyeur (2) et parallèle à la zone de contact entre la bande (2) et le rouleau inversé (1).

9. Dispositif selon la revendication 8, **caractérisé en ce que**, selon une variante de construction, la surface (7) sur laquelle la section supérieure de la bande de nettoyage (2) glisse peut être parfaitement rigide et plate, au moins dans la zone dans laquelle elle entre en contact avec cette bande.

10. Dispositif selon la revendication 8, dans lequel des moyens autres que ledit tube (13) pouvant être gonflé, par exemple, un dispositif de pression rigide et/ou chargé par ressort, peut être adopté en utilisant des solutions connues, par exemple, dans le domaine des dispositifs de nettoyage des rouleaux de machines d'impression rotatives.

11. Dispositif selon une ou plusieurs des revendications précédentes, **caractérisé en ce qu'**un second rouleau (100) destiné à nettoyer la section inférieure du convoyeur principal (T) peut être agencé parallèlement au rouleau inversé (1) et en aval de ce dernier, avec une longueur légèrement supérieure à celle dudit rouleau inversé (1), lequel rouleau est, par exemple, revêtu d'un tissu ou étoffe présentant des caractéristiques appropriées, tourne aussi dans le sens du rouleau inversé (1) et est situé à une très faible distance et/ou de manière à entrer sensiblement en contact avec ce dernier, de telle sorte que, dans la zone de contact mutuel, les deux rouleaux peuvent dans tous les cas se déplacer dans des sens opposés, sans réaction négative, ce second rouleau (100) étant aussi supporté par les parois latérales (104) à ses extrémités de manière à pouvoir tourner du châssis principal (4) du dispositif et les extrémités des deux rouleaux adjacents (1, 100) peuvent comporter des épaulements de fermeture (16) qui agissent sensiblement en contact avec les extrémités desdits rouleaux et avec la section inférieure du convoyeur principal (T) de manière à définir un réservoir qui présente un contact limité avec l'environnement externe et est très proche dudit convoyeur principal (T) et dans lequel du solvant est introduit de manière continue par au moins une tuyauterie d'alimentation (17), ledit solvant tombant partiellement à travers l'espace libre existant entre les deux rouleaux (1, 100) et étant collecté partiellement par la surface inférieure (7) qui le transfère par gravité dans le réservoir de collecte (8), alors qu'une autre partie dudit solvant est transportée vers le haut par la surface ascendante du rouleau inversé (1), dans le but de faciliter l'extraction de la peinture exécutée par ce rouleau et de ramollir la peinture résiduelle qui reste sur la bande principale (T) de telle sorte que ladite peinture peut ensuite être plus facilement retirée par le rouleau de finition (100), alors qu'une autre partie dudit solvant suit la surface du second rouleau (100) et facilite la finition de ce composant et reste partiellement sur le convoyeur principal (T) de manière à ramollir toute peinture résiduelle qui est ensuite définitivement retirée par une lame de raclage de finition (18) qui est montée avec ses extrémités sur lesdites parois latérales (104) par l'intermédiaire de moyens de réglage connus, agencés entre les deux.

12. Dispositif selon une ou plusieurs des revendications précédentes, **caractérisé en ce qu'**il comprend des moyens destinés à simplifier l'entraînement de l'ensemble des éléments tournants, la puissance d'entraînement étant dérivée, par exemple, du moto-réducteur (5) qui entraîne le rouleau inversé (1), un dispositif d'entraînement (26) par exemple du type à poulie et courroie crantées qui est agencé dans ce but afin de transmettre le mouvement de rotation à partir du rouleau inversé (1) vers le rouleau aval (100), alors que, de l'autre côté du dispositif, le mouvement de rotation est obtenu à partir de ce second rouleau (100) au moyen d'un dispositif d'entraînement angulaire (27) puis d'une transmission (28) avec des axes parallèles l'un à l'autre et perpendiculaires auxdits rouleaux (1, 100), à partir d'où s'étend une transmission avec un arbre et des joints de cardan (29) aussi montés sur le support (30) ce qui peut aussi faciliter le support en rotation de la poulie d'entraînement (202) de la bande de convoyeur de nettoyage (2).

13. Dispositif selon une ou plusieurs des revendications précédentes, **caractérisé en ce qu'**il peut être monté sur la machine de peinture et les parois latérales (104) du châssis (4) peuvent comporter de manière externe, du côté d'entrée dans la machine de peinture, des broches rainurées latérales (19) et des roues de rouleau (20) correspondantes à un niveau inférieur, alors que la machine de peinture comporte sur ses parois latérales, des guides horizontaux (21) avec un profil en forme de C, qui sont orientés avec les parties creuses l'une face à l'autre et qui, avec l'extrémité la plus à l'extérieur, supportent des roues composites (22), s'étendant sur leur côté interne, qui se déplacent à l'intérieur de guides correspondants (121) avec un profil en forme de C, qui sont identiques auxdits guides (21) mentionnés précédemment et qui supportent eux-mêmes, sur leur extrémité à l'intérieur de la machine de peinture, des roues composites (122) qui se déplacent à l'intérieur desdits guides (21), lesdits guides (121) étant interconnectés par au moins un élément transversal (23) fixé sur les faces internes de ces guides (121) et les extrémités de cet élément transversal (23) comportant, fixés transversalement sur ce dernier, des supports (24) comportant une rainure supérieure (124) afin d'assurer un couplage centré avec lesdites broches rainurées (19) et comportant des pistes verticales et plates (224) sur lesquelles se déplacent et reposent lesdites roues (20).

14. Dispositif selon la revendication 13, **caractérisé en ce qu'**il comprend des moyens de réglage, par exemple, du type came, afin de permettre un réglage précis de l'état dudit dispositif, par exemple, afin d'assurer le réglage avec précision de l'interférence entre rouleau inversé (1) et le convoyeur à nettoyer (T) de la machine de peinture.
